# EUROPÄISCHE PATENTSCHRIFT

(11) **EP 3 647 888 B1**
(45) Veröffentlichungstag und Bekanntmachung des Hinweises auf die Patenterteilung: **14.07.2021**
(21) Anmeldenummer: 18203609.5
(22) Anmeldetag: 31.10.2018
(51) Int. Cl.: G05B 19/042, H04L 12/40, H04L 29/12, H04L 29/08

(54) **STEUERUNGSVERBUND UND VERFAHREN ZUM BETRIEB DES STEUERUNGSVERBUNDES**
CONTROL STRUCTURE AND METHOD FOR OPERATING THE SAME
ENSEMBLE DE COMMANDE ET PROCÉDÉ DE FONCTIONNEMENT DE L'ENSEMBLE DE COMMANDE

(43) Veröffentlichungstag der Anmeldung: 06.05.2020
(73) Patentinhaber: Siemens Aktiengesellschaft, 80333 München (DE)
(72) Erfinder: Gerlach, Hendrik, 91058 Erlangen (DE); Schlittenbauer, Markus, 93354 Siegenburg (DE)

(56) Entgegenhaltungen:
- EP-A1- 1 006 423
- DE-A1-102010 015 455
- DE-A1-102015 105 929

## Beschreibung

Die Erfindung betrifft ein Steuerungsverbund zur Steuerung einer technischen Einrichtung umfassend ein Bussystem, ein erstes Automatisierungsgerät und ein zweites Automatisierungsgerät, wobei das erste Automatisierungsgerät ein erstes Steuerungsprogramm und das zweite Automatisierungsgerät ein zweites Steuerungsprogramm zum Steuern der technischen Einrichtung aufweist, wobei das erste und das zweite Steuerungsprogrammm derart ausgestaltet sind, dass sie jeweils die gleichen Steuerungsaufgaben für die technische Einrichtung ausführen, wobei das erste Automatisierungsgerät einen ersten Netzwerk-Interface-Controller mit einer ersten Standard-Hardware-Adresse aufweist, welche an das Bussystem angeschlossen ist und das zweite Automatisierungsgerät einen zweiten Netzwerk-Interface-Controller mit einer zweiten Standard-Hardware-Adresse aufweist, welcher an das Bussystem angeschlossen ist.

Der erfindungsgemäße Steuerungsverbund kann, beispielsweise als ein redundantes Automatisierungssystem ausgestaltet, welches auch als ein H-System (hochverfügbares System) bezeichnet wird, betrachtet werden. Ein H-System ist ein ausfallsicheres Automatisierungssystem, welches in der Regel zwei gekoppelte Automatisierungsgeräte, insbesondere speicherprogrammierbare Steuerungen, aufweist, welche gemeinsam eine technische Einrichtung steuern. Dabei hat zu einem Zeitpunkt genau ein Automatisierungsgerät die Führung bei der Steuerung der technischen Einrichtung. Das jeweils führende Automatisierungsgerät wird auch als Haupt-Automatisierungsgerät oder Master bezeichnet. Das jeweils andere Automatisierungsgerät ist bereit jederzeit die Steuerung der technischen Einrichtung zu übernehmen. Das andere Automatisierungsgerät wird auch als Ersatz-Automatisierungsgerät oder Reserve bezeichnet. Sollte einer der beiden Automatisierungsgeräte ausfallen, ist es möglich, dass der technische Prozess von dem jeweils anderen Automatisierungsgerät gesteuert wird, welches auch als hochverfügbar bezeichnet wird. Jedes Automatisierungsgerät in einem H-System verfügt über eine eigene Schnittstelle, beispielsweise eine Ethernet-Schnittstelle, mit einer eigenen IP-Adresse für die Kommunikation an einem Bussystem, insbesondere an einem Feldbus.

In der DE 10 2009 050 449 B3 ist auch ein H-System mit einer ersten Automatisierungssteuerung und einer zweiten Automatisierungssteuerung offenbart.

Das US-Patent US 5 148 433 A stellt ebenfalls ein H-System vor, wobei beide Steuerungen dieselbe Adresse haben.

In einer Automatisierungsanlage existieren in der Regel viele Teilnehmer, welche sich mit dem redundanten Automatisierungssystem verbinden müssen um Prozessdaten abzuliefern oder abzuholen, bzw. anzuzeigen oder zu verarbeiten. Unter den genannten Teilnehmern hat ein Großteil der Teilnehmer Wissen über eine Existenz eines redundanten Automatisierungssystems (2-CPU-System).

Bei den bekannten H-Systemen ist es von Nachteil, dass für Teilnehmer, welche eine Verbindung zu einem H-System aufbauen müssen, nicht klar ist, welche entfernte IP-Adresse das H-System hat. Entweder hat es eine erste Adresse für das erste Automatisierungsgerät oder eine zweite Adresse für das zweite Automatisierungsgerät. Wird eine der beiden Adressen verwendet und genau das Automatisierungsgerät mit der verwendeten Adresse fällt aus, so kann der Teilnehmer die Verbindung nicht mehr aufbauen obwohl das H-System als Ganzes noch verfügbar ist.

Bisher wurde das Problem derart gelöst, dass nur funktional erweiterte Teilnehmer (Client, HMI's) existieren, welche eine weitere IP-Adresse konfiguriert haben, fällt die Verbindung mit der ersten Adresse aus und kann nicht wieder aufgebaut werden, so wird mit einer zweiten IP-Adresse gearbeitet. Der Nachteil dieser Lösung ist das in den Teilnehmern eine Spezialimplementierung für die Adressverwaltung notwendig ist.

In der europäischen Patentschrift EP 3 026 513 B1 wird eine Lösung vorgeschlagen, wobei dem redundanten Automatisierungssystem eine Referenzdatenschnittstelle vorgeschaltet ist, welcher eine Referenzadresse zugeordnet ist. Dabei ist die Referenzdatenschnittstelle ausgestaltet, einen ersten Verbindungsweg zwischen dem H-System und einen zweiten Verbindungsweg zwischen dem H-System zu verwalten.

Die DE 10 2015 105 929 A1 zeigt ein Automatisierungsgerät mit zwei redundanten Steuerungen, wobei jede Steuerung zwei Kommunikationsschnittstellen aufweist, die jeweils über verschiedene MAC Adressen ansprechbar sind.

Aufgabe der vorliegenden Erfindung ist es, eine hochverfügbare Steuerung oder ein hochverfügbares Steuerungssystem bereitzustelle welche, aus Kundensicht als eine Blackbox betrachtet werden kann und im Netzwerk auch so zu adressieren ist. Ein Anwender soll nicht wissen müssen, welches Gerät der redundanten Steuerung gerade aktiv ist (Master). Für den Anwender wäre es von großem Vorteil, wenn er alles nur über eine Adresse ansprechen kann.

Bei dem erfindungsgemäßen Steuerungsverbund mit dem ersten Automatisierungsgerät und dem zweiten Automatisierungsgerät wird die Aufgabe dadurch gelöst, dass zwischen dem ersten Netzwerk-Interface-Controller und einem ersten Protokollstapel des ersten Automatisierungsgeräts ein erster virtueller Netzwerk-Interface-Controller angeordnet ist und zwischen dem zweiten Netzwerk-Interface-Controller und einem zweiten Protokollstapel des zweiten Automatisierungsgeräts ein zweiter virtueller Netzwerk-Interface-Controller angeordnet ist, wobei weiterhin sowohl der erste als auch der zweite Netzwerk-Interface-Controller ausgestaltet ist, zusätzlich eine Verbund-Hardware-Adresse zu verwalten, wobei über die erste Standard-Hardware-Adresse der erste Protokollstapel ansprechbar ist und über die Verbund-Hardware-Adresse der erste Protokollstapel nur über den ersten virtuellen Netzwerk-Interface-Controller ansprechbar ist, wenn dieser aktiv geschaltet ist und über die zweite Standard-Hardware-Adresse der zweite Protokollstapel ansprechbar ist und über die Verbund-Hardware-Adresse der zweite Protokollstapel nur über den zweiten virtuellen Netzwerk-Interface-Controller ansprechbar ist, wenn dieser aktiv geschaltet ist.

Vorzugsweise ist im ersten Automatisierungsgerät ein erster Redundanzmanager und im zweiten Automatisierungsgerät ein zweiter Redundanzmanager vorhanden, wobei die beiden Redundanzmanager über eine Synchronisations-Verbindung miteinander in Verbindung stehen und ausgestaltet sind, den ersten virtuellen Netzwerk-Interface-Controller aktiv zu schalten und den zweiten virtuellen Netzwerk-Interface-Controller inaktiv zu schalten oder umgekehrt.

Mit Vorteil ist der Steuerungsverbund nun von externen Teilnehmern nur über eine Adresse ansprechbar, nämlich über die Verbund-Hardware-Adresse bzw. der ihr zugeordneten Verbund IP-Adresse. Das erfindungsgemäße System ist nicht auf zwei Automatisierungsgeräte eingeschränkt. Ein Steuerungsverbund kann auch aus n Automatisierungsgeräten bestehen, wobei immer nur eins aktiv ist. Die virtuellen Netzwerk-Interface-Controller der zu einem gemeinsamen Verbund gehörenden Automatisierungsgeräte sind dann vorzugsweise logisch miteinander verbunden. Von allen so verbundenen virtuellen Netzwerk-Interface-Controllern ist dann immer genau einer aktiv, alle anderen sind inaktiv. Bei einem Failover wird der aktive virtuelle Netzwerk-Interface-Controller inaktiv geschaltet oder fällt aus und einer der anderen logisch gekoppelten virtuellen Netzwerk-Interface-Controller übernimmt die aktive Rolle. Unter "Failover" ist im Sinne der Erfindung ein ungeplanter, im Falle eines Fehlers, z.B. eines einseitigen Ausfalls, oder auch ein geplanter, im Falle eines gewollten Umschaltens, Wechsel zwischen zwei oder mehreren Automatisierungsgeräten gemeint. Als Folge davon, können die Dienste trotz des Ausfalls eines der Systeme hoch verfügbar gehalten werden.

Allen logischen gekoppelten virtuellen Netzwerk-Interface-Controllern wird eine geteilte MAC-Adresse zugewiesen, nämlich die Verbund-Hardware-Adresse. Vorzugsweise parametrieren die virtuellen Netzwerk-Interface-Controller diese MAC-Adresse als zusätzliche MAC-Adresse in einen Hardware-Filter, der unterlagerten ersten bzw. zweiten Netzwerk-Interface-Controller. Hier ist es von Vorteil, dass der nun unterlagerte Netzwerk-Interface-Controller nicht in einem sogenannten Promiskuitiven Mode betrieben werden muss, was eine Filterung der MAC-Adresse in Software nach sich ziehen würde, wobei diese Filterung in Software wieder auf die Performance des Gerätes gehen würde, insbesondere auf kleinen Geräten sollte dies unterbleiben wegen einer zu erwartenden zu hohen Empfangslast.

Vorzugsweise sind die beiden Redundanzmanager ausgestaltet, eine Funktionsüberwachung an ihren Automatisierungsgeräten oder an darin ablaufenden Funktionen durchzuführen und bei einer erkannten Fehlfunktion, den jeweils aktiven virtuellen Netzwerk-Interface-Controller inaktiv zu schalten und den entsprechenden inaktiven virtuellen Netzwerk-Interface-Controller aktiv zu schalten. Der Redundanzmanager überwacht typischerweise die lokalen Funktionen und insbesondere die Funktionen der anderen zu einem Verbund gehörenden Automatisierungsgeräte. Dabei stimmt er sich typischerweise über einen Kommunikationskanal mit den anderen Redundanzmanagern der anderen Automatisierungsgeräte des Verbundes ab. Im Fehlerfall (Ausfall des aktuellen Masters) leiten die Redundanzmanager des Verbundes einen Failover ein. Ziel dabei ist es, sicher zu stellen, dass es im Steuerungsverbund zu einem dedizierten Zeitpunkt immer nur genau einen Master gibt.

Der Kommunikationskanal kann physikalisch gesehen auch redundant ausgeführt sein, um die Robustheit des Steuerungsverbundes gegen Einzelfehler zu erhöhen.

In einer weiteren Ausgestaltung ist es vorteilhaft, wenn die Synchronisations-Verbindung als ein Kommunikationskanal mit Layer-2-Ethernet-Frames ausgestaltet ist. Demnach kann der Redundanzmanager in einer Ausführungsform einen Kommunikationskanal über das vorhandene Bussystem über Layer-2-Ethernet-Frames aufbauen. In einer speziellen Ausführungsform dazu, werden dabei MAC-Adressen verwendet, die nicht von normalen IEEE802.1D konformen Bridges weitergeleitet werden. In einer weiteren Ausführungsform könnte man sich vorstellen, dass der Kommunikationskanal nicht nur zur Koordinierung des Failovers zwischen den Redundanzmanagern verwendet wird, sondern gleichzeitig auch zur Übertragung von Synchronisationsdaten zur Synchronisation der Daten und Zustände der Dienste und Applikationen des betreffenden Steuerungsverbundes.

Auch könnte die Synchronisationsverbindung über eine dedizierte Leitung, insbesondere eine redundant ausgelegte Leitung, erfolgen.

Weiterhin ist es vorteilhaft, dass die Protokollstapel jeweils eine Standard-Schnittstelle für Datenverkehr von Standard-Applikationen und eine Verbund-Schnittstelle für Datenverkehr von Verbund-Applikationen aufweisen. Dabei sind im Sinne der Erfindung Standard-Dienste von Standard-Applikationen, Dienste der Automatisierungstechnik, wie sie von einem Engineering-System benutzt werden, zu verstehen. Diese Dienste ermöglichen den Zugriff auf jegliches Automatisierungsgerät. Auch beispielsweise Diagnose- und Energiemanagementfunktionen sowie Firmware Updates und sonstige Uploades zu den Automatisierungsgeräten zählen zu den Standard-Diensten. Verbunddienste von Verbund-Applikationen sind interne Datendienste des Steuerungsverbundes und diese sind von außerhalb des Steuerungsverbundes nutzbar, z.B. für den Zugriff eines Clients auf den Steuerungsverbund. Demnach ist es vorteilhaft, den Kommunikationskanal bzw. die Synchronisations-Verbindung auch zur Synchronisation der Daten und Zustände der Verbund-Dienste bzw. dessen Verbund-Applikationen und/oder zur Übertragung von Signalen zur zeitlichen Steuerung zum Abgleich der Zyklen der Bearbeitung der jeweiligen Steuerungsprogramme zu nutzen.

In einer weiteren Ausgestaltung weisen die Protokollstapel einen Routing-Manager auf, welcher ausgestaltet ist, Datenverkehr von Standard-Applikationen über die Standard-Schnittstelle zu leiten und für Datenverkehr von Verbund-Applikationen über die Verbund-Schnittstelle zu leiten. Dabei ist der Routing-Manager des jeweiligen Protokollstapels derart ausgestaltet, dass beispielsweise ausgehender Datenverkehr von Verbund-Applikationen bzw. Verbund-Diensten und ausgehender Datenverkehr von Standard-Applikationen bzw. Standard-Diensten über das entsprechende IP-Interface bzw. die entsprechende Standard-Schnittstelle oder entsprechende Verbund-Schnittstelle geleitet werden muss. Damit ist sichergestellt, dass der von Verbund-Applikationen generierte Daten-Verkehr im virtuellen Netzwerk-Interface-Controller des Reservegerätes nicht verwendet wird.

Weiterhin ist es für das Datenmanagement zwischen den Diensten vorteilhaft, wenn die Protokollstapel eine Verbund-Dienste-Programmierschnittstelle und eine Standard-Dienste Programmierschnittstelle aufweisen.

Im Sinne der Automatisierungstechnik ist es von Vorteil, wenn der Steuerungsverbund ausgelegt als ein hochverfügbares, redundantes Automatisierungssystem für Automatisierungsanwendungen, bei denen die Verfügbarkeit eines Automatisierungsgerätes von höchster Priorität ist, und ausgestaltet ist bei einem Zugriff durch einen Client als ein einziges System dargestellt zu werden. Auch für die Gegenrichtung, also einem Zugriff von außen auf Dienste des Steuerungsverbundes kann die Hochverfügbarkeit gesehen werden. Der Steuerungsverbund kann auch Dienste haben, die als Client auftreten. Solche Verbund-Dienste können als Client auf Server-Cluster-Dienste zugreifen, die auf anderen Clustern liegen oder auch auf Daten, die in hochverfügbaren Storage-Systemen liegen.

Die eingangs genannte Aufgabe wird ebenso gelöst, durch ein Verfahren zum Betrieb eines Steuerungsverbundes. Bei dem Verfahren zum Betrieb eines Steuerungsverbundes zur Steuerung einer technischen Einrichtung, wobei an einem Bussystem, ein erstes Automatisierungsgerät und ein zweites Automatisierungsgerät redundant betrieben werden, wird auf dem ersten Automatisierungsgerät ein erstes Steuerungsprogramm und auf dem zweiten Automatisierungsgerät ein zweites Steuerungsprogramm zum Steuern der technischen Einrichtung zum Ablauf gebracht, wobei das erste und das zweite Steuerungsprogramm derart ausgestaltet sind, dass sie jeweils die gleichen Steuerungsaufgaben für die technische Einrichtung ausführen, wobei das erste Automatisierungsgerät über einen ersten Netzwerk-Interface-Controller mit einer ersten Standard-Hardware-Adresse am Bussystem betrieben wird und das zweite Automatisierungsgerät über einen zweiten Netzwerk-Interface-Controller mit einer zweiten Standard-Hardware-Adresse am Bussystem betrieben wird, kennzeichnend für das Verfahren ist es, dass zwischen dem ersten Netzwerk-Interface-Controller und einem ersten Protokollstapel des ersten Automatisierungsgerätes ein erster virtueller Netzwerk-Interface-Controller betrieben wird und zwischen dem zweiten Netzwerk-Interface-Controller und einem zweiten Protokollstapel des zweiten Automatisierungsgerätes ein zweiter virtueller Netzwerk-Interface-Controller betrieben wird, wobei weiterhin sowohl der erste als auch der zweite Netzwerk-Interface-Controller zusätzlich mit einer Verbund-Hardware-Adresse betrieben wird, wobei über die erste Standard-Hardware-Adresse der erste Protokollstapel angesprochen wird und über die Verbund-Hardware-Adresse der erste Protokollstapel nur über den ersten virtuellen Netzwerk-Interface-Controller angesprochen werden kann, wenn dieser aktiv geschaltet ist und über die zweite Standard-Hardware-Adresse der zweite Protokollstapel angesprochen wird und über die Verbund-Hardware-Adresse der zweite Protokollstapel nur über den zweiten virtuellen Netzwerk-Interface-Controller angesprochen werden kann, wenn dieser aktiv geschaltet ist.

Vorteilhafterweise wird im ersten Automatisierungsgerät ein erster Redundanzmanager und im zweiten Automatisierungsgerät ein zweiter Redundanzmanager betrieben, wobei die beiden Redundanzmanager über eine Synchronisations-Verbindung miteinander in Verbindung stehen und ausgestaltet sind, den ersten virtuellen Netzwerk-Interface-Controller aktiv zu schalten und den zweiten virtuellen Netzwerk-Interface-Controller inaktiv zu schalten oder umgekehrt.

Vorzugsweise parametrieren die virtuellen Netzwerk-Interface-Controller die Verbund-Hardware-Adresse als zusätzliche MAC-Adresse in einen Hardware-Filter des unterlagerten ersten Netzwerk-Interface-Controllers und des zweiten Netzwerk-Interface-Controllers. Vorteilhaft hieran ist, dass die unterlagerten Netzwerk-Interface-Controller nicht in einem sogenannten Promiscuous Mode betrieben werden müssen, denn dies benötigt bei einer Lösung über Software zu viel Performance der Geräte, welches zu Lasten einer schnellen Kommunikation geht und/oder nachteilig für die Leistungsfähigkeit bei der Bearbeitung der Steuerungsaufgaben sein kann (d.h. die CPU Leistung geht für die Steuerungsaufgaben verloren, welches ja die Hauptaufgabe einer PLC sein sollte.

Vorteilhafter Weise führen die beiden Redundanzmanager eine Funktionsüberwachung an ihren Automatisierungsgeräten oder führen darin ablaufenden Funktionen durch und bei einer erkannten Fehlfunktion an einem Automatisierungsgerät mit dem aktiven virtuellen Netzwerk-Interface-Controller schalten sie diesen inaktiv und den entsprechenden inaktiven virtuellen Netzwerk-Interface-Controller des anderen Automatisierungsgerätes schalten sie inaktiv.

Verfahrensgemäß ist es vorteilhaft die Synchronisations-Verbindung als ein Kommunikationskanal mit Layer-2 Ethernet-Frames zu betreiben und diesen Kommunikationskanal über das Bussystem und die Netzwerk-Interface-Controller aufzubauen.

Verfahrensgemäß und insbesondere bei einer Implementation des Verfahrens in Software innerhalb des Protokollstapels ist es vorteilhaft, die Protokollstapel mit jeweils einer Standard-Schnittstelle für Datenverkehr von Standard-Applikationen und mit einer Verbund-Schnittstelle für Datenverkehr von Verbund-Applikationen zu betreiben, dabei wird ausgehender Datenverkehr dementsprechend über die entsprechenden Schnittstellen geleitet, wobei je nach Zustand des virtuellen Netzwerk-Interface-Controllers Datenverkehr von Verbund-Applikationen entweder gesperrt oder weitergeleitet wird, Datenverkehr von Standard-Applikationen kann unabhängig davon immer gesendet werden, zusätzlich erfolgt die passende Aufprägung der entsprechenden Standard-Hardware-Adresse. Auch die passende Absender Standard-IP Adresse wird eingetragen, wenn es sich bei dem zu sendenden Paket um ein IP-Paket handelt.

Die Zeichnung zeigt ein Ausführungsbeispiel eines Steuerungsverbundes mit zumindest zwei Automatisierungsgeräten. Es zeigt
- FIG 1: einen Steuerungsverbund in vereinfachter Darstellung zum Aufzeigen der Adressvergabe,
- FIG 2 den in FIG 1: aufgezeigten Steuerungsverbund in einer detaillierten Darstellung mit Kopplungswegen und Applikationen,
- FIG 3: einen Sonderfall, wenn das Bussystem in unterschiedliche Segmente unterteilt ist, und
- FIG 4: ein zusammenfassendes Blockschaltbild zur Darstellung einer gemeinsamen IP-Adresse für eine Blackbox-Sicht.

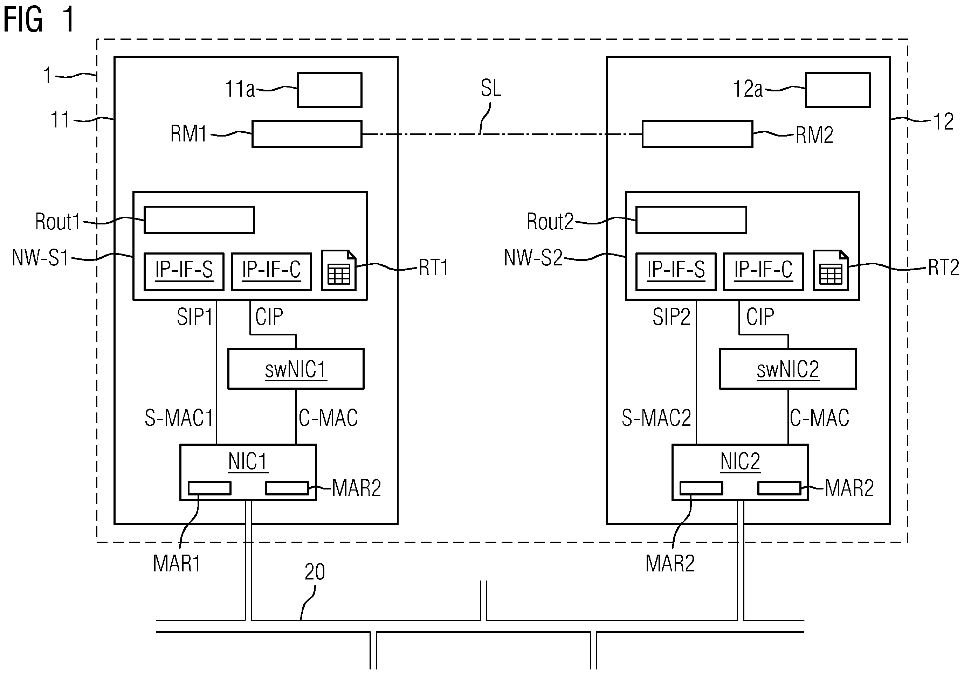

Gemäß FIG 1 ist ein Steuerungsverbund 1 zur Steuerung einer technischen Einrichtung dargestellt. Der Steuerungsverbund 1 umfasst ein Bussystem 20, ein erstes Automatisierungsgerät 11 und ein zweites Automatisierungsgerät 12, wobei das erste Automatisierungsgerät 11 ein erstes Steuerungsprogramm 11a und das zweite Automatisierungsgerät 12 ein zweites Steuerungsprogramm 12a zum Steuern der technischen Einrichtung aufweist. Das erste und das zweite Steuerungsprogramm 11a, 12a sind derart ausgestaltet, dass sie jeweils die gleichen Steuerungsaufgaben für die technische Einrichtung ausführen. Das erste Automatisierungsgerät 11 weist einen ersten Netzwerk-Interface-Controller NIC1 mit einer ersten Standard-Hardware-Adresse S-MAC1 auf. Der erste Netzwerk-Interface-Controller NIC1 ist physikalisch an das Bussystem 20 angebunden.

Zwischen dem ersten Netzwerk-Interface-Controller NIC1 und einem ersten Protokollstapel NW-S1 des ersten Automatisierungsgerätes 11 ist ein erster virtueller Netzwerk-Interface-Controller swNIC1 angeordnet. Bei dem zweiten Automatisierungsgerät 12 findet sich eine identische Anordnung und zwar ist zwischen einem zweiten Netzwerk-Interface-Controller NIC2 und einem zweiten Protokollstapel NW-S2 ein zweiter virtueller Netzwerk-Interface-Controller swNIC2 angeordnet. Die Netzwerk-Interface-Controller NIC1 und NIC2 sind nun derart ausgestaltet, dass sie jeweils ein erstes MAC-Adressregister MAR1 und ein zweites MAC-Adressregister MAR2 aufweisen. Demnach kann der erste Netzwerk-Interface-Controller NIC1 eine erste Standard-Hardware-Adresse S-MAC1 und eine zweite Verbund-Hardware-Adresse C-MAC verwalten. Ebenso kann der zweite Netzwerk-Interface-Controller NIC2 eine zweite Standard-Hardware-Adresse S-MAC2 und die Verbund-Hardware-Adresse C-MAC in seinen Registern MAR1, MAR2 verwalten.

Über die erste Standard-Hardware-Adresse S-MAC1 ist der erste Protokollstapel NW-S1 ansprechbar und über die Verbund-Hardware-Adresse C-MAC ist der erste Protokollstapel NW-S1 nur über den ersten virtuellen Netzwerk-Interface-Controller swNIC1 ansprechbar, wenn dieser aktiv geschaltet ist. Dementsprechend ist über die zweite Standard-Hardware-Adresse S-MAC 2 der zweite Protokollstapel NW-S2 ansprechbar und über die Verbund-Hardware-Adresse C-MAC ist der zweite Protokollstapel NW-S2 nur über den zweiten virtuellen Netzwerk-Interface-Controller swNIC2 ansprechbar, wenn dieser aktiv geschaltet ist.

Für das aktiv und inaktiv Schalten der virtuellen Netzwerk-Interface-Controller swNIC1, swNIC2 ist in jedem Automatisierungsgerät 11, 12 je ein erster Redundanzmanager RM1 und ein zweiter Redundanzmanager RM2 angeordnet. Die beiden Redundanzmanager RM1,RM2 sind über eine Synchronisations-Verbindung SL miteinander verbunden und ausgestaltet, den ersten virtuellen Netzwerk-Interface-Controller swNIC1 aktiv zu schalten und den zweiten virtuellen Netzwerk-Interface-Controller swNIC2 inaktiv zu schalten oder umgekehrt.

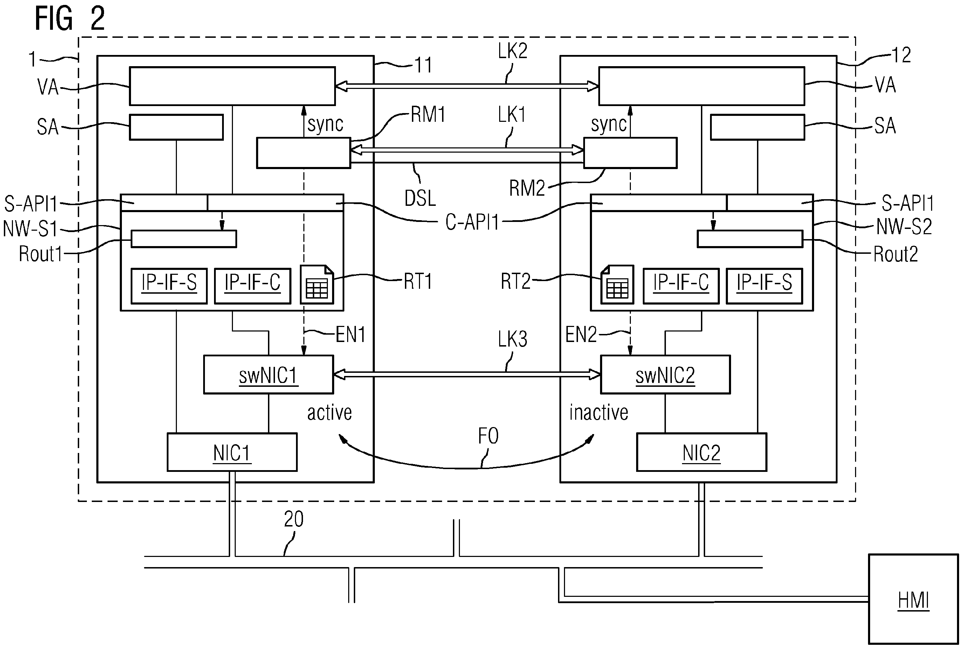

Neben der Zuweisung der Standard-Hardware-Adressen und der Verbund-Hardware-Adressen wird den virtuellen Netzwerk-Interface-Controllern swNIC1, swNIC 2 ebenfalls eine Verbund IP-Adresse CIP zugewiesen und selbstverständlich wird den Standard-Applikationen SA eine erste Standard IP-Adresse SIP1 und eine zweite Standard IP Adresse SIP2 zugewiesen. Layer-2-Applikationen und entsprechende IP-Applikationen verwenden dann zur Adressierung des Steuerungs-Verbundes 1 bzw. der darin ablaufenden Standard-Applikationen SA und Verbund-Applikationen VA (siehe FIG 2) immer die Verbund-Hardware-Adresse C-MAC und die Verbund-IP Adresse CIP. Dies hat den Vorteil, dass bei einem "Hot-Stand by-Umzug" von beiden Adressen (MAC und IP) eine MAC-IP Zuordnung erhalten bleibt. Vorteilhafterweise müssen ARP-Cache von IP-Clients dementsprechend nicht upgedatet werden. Die IP-Kommunikation kann auch nach einem Failover FO sofort weiterlaufen. Der Failover FO wird hinsichtlich der Kommunikation von angeschlossenen Clients (HMI) (siehe FIG 2) nicht bemerkt.

Die virtuellen Netzwerk-Interface-Controller swNIC1, swNIC2 werden von den zugehörigen Redundanzmanagern RM1,RM2 gesteuert. Die Redundanzmanager RM1,RM2 im Steuerungsverbund entscheiden, welches Automatisierungsgerät 11,12 das derzeit aktive Gerät ist (Master) und welches Gerät bis zu einem Failover, also dem Ausfall des Masters, das inaktive Gerät ist (Backup). Der Redundanzmanager RM1,RM2 eines Automatisierungsgerätes 11,12 steuert die Zustände der virtuellen Netzwerk-Interface-Controllern swNIC1, swNIC2 entsprechend (aktiv/inaktiv). Eine Kommunikation der Redundanzmanager RM1,RM2 kann über eine dedizierte (siehe FIG 2) Sync-Leitung DSL erfolgen oder auch als Layer-2 Kommunikation über das Bussystem 20.

Die jeweiligen Protokollstapel NW-S1 und NW-S2 weisen jeweils einen ersten Routingmanager Rout1 und einen zweiten Routing-manager Rout2 auf. Die Routingmanager Rout1, Rout2 bilden dementsprechend den Routing-Teil des ersten Protokollstapels NW-S1 und zweiten Protokollstapel NW-S2. Sie sorgen dafür, dass ausgehender Datenverkehr von Verbund-Applikationen VA und ausgehender Datenverkehr von Standard-Applikationen SA über ein entsprechendes IP-Interface geleitet werden muss. Dazu weisen die Protokollstapel NW-S1, NW-S2 jeweils eine Standard-Schnittstelle IP-IF-S und eine Verbund-Schnittstelle IP-IF-C auf. Der Datenverkehr nämlich der IP-Traffic von Standard-Applikationen SA ist über die Standard-Schnittstelle IP-IF-S zu leiten und der Datenverkehr der Verbund-Applikationen VA ist über die Verbund-Schnittstelle IP-IF-C zu leiten. Wird das "richtige" Interface selektiert, läuft der ausgehende Datenverkehr über den entsprechenden Netzwerk-Interface-Controller NIC1,NIC2 bzw. den entsprechenden virtuellen Netzwerk-Interface-Controller swNIC1, swNIC2. Damit wird sichergestellt, dass Datenverkehr von Verbund-Applikationen VA je nach Zustand des virtuellen Netzwerk-Interface-Controllers swNIC1, swNIC2 gesperrt oder weitergeleitet wird und Datenverkehr von Standard-Applikationen SA unabhängig davon immer gesendet werden kann. Zudem erfolgt damit auch eine passende Aufprägung einer Absender-MAC-Adresse. Falls erforderlich wird auch die passende IP-Absenderadresse damit zugewiesen. Die Zuordnung der IP-Adresse erfolgt noch im Protokollstapel NW-S1, NW-S2 und spätestens mit dem Verlassen einer der Schnittstellen.

Der Routingmanager Rout1, Rout2 nimmt jeweils eine Routing-Tabelle RT1, RT2 zu Hilfe. Ein Standard-IP Stack kann sich in der bisher beschriebenen erfindungsgemäßen Konstruktion anhand seiner Routing-Tabellen allein nicht mehr entscheiden, welches IP-Interface, Standard-Schnittstelle IP-IF-S oder Verbund-Schnittstelle IP-IF-C für zu sendenden IP-Traffic zu verwenden ist. IP-Routing, damit ist hier gemeint, die Auswahl des zu nutzenden Sende-Interfaces (Standard-Schnittstelle, Verbund-Schnittstelle) erfolgt im Standard-IP Stacks allein anhand der Ziel-IP-Adresse. Das zu verwendende Interface wird dabei anhand der Routing-Tabelle ermittelt. Dabei spielt das IP-Subnetz eines IP-Interfaces eine entscheidende Rolle. Durch das Vorhandensein von zwei, aus Sicht des IP-Stacks gleichwertigen, Absender-Interfaces (gleichwertig, weil sie sich im gleichen IP-Subnetz befinden) besteht eine Mehrdeutigkeit bei der Auswahl des Absender-Interfaces und damit auch der Absender IP-Adresse.

Diese Mehrdeutigkeit wird durch den jeweiligen Routingmanager Rout1, Rout2 aufgelöst. Der Routingmanager Rout1, Rout2 ist eine kleine softwaretechnische Erweiterung im IP-Stack bzw. im ersten Protokollstapel NW-S1 und im zweiten Protokollstapel NW-S2 und sorgt dafür, dass IP-Pakete von Verbund-Applikationen VA über die Verbund-Schnittstelle IP-IF-C, welche dem jeweiligen virtuellen Netzwerk-Interface-Controller swNIC1, swNIC2 zugeordnet ist, versendet werden, und alle anderen IP-Pakete, also die von Standard-Applikationen SA den üblichen Weg über die Standard-Schnittstelle IP-IF-S laufen und damit direkt über den ersten Netzwerk-Interface-Controllern NIC1 bzw. den zweiten Netzwerk-Interface-Controller NIC2.

Bezogen auf zu empfangene Datenpakete bildet der Routingmanager Rout1, Rout2 Informationen, über welchen Weg die Empfangspakete eingetroffen sind, d.h., ob sie über einen Verbund-Pfad bzw. eine Verbund-Applikation VA, also über den virtuellen Netzwerk-Interface-Controller NIC1,NIC2 empfangen wurden. Diese Informationen werden einer Verbund-Dienste-Programmierschnittstelle C-API1,C-API2 zur Verfügung gestellt und können von den Verbund-Applikationen VA genutzt werden.

Gemäß FIG 2 ist der mit FIG 1 dargestellte Steuerungsverbund 1 etwas detaillierter dargestellt und zum Teil wurde auf die Funktionalitäten und die Mittel, welche in FIG 2 abgebildet sind, mit der Beschreibung von FIG 1 bereits eingegangen. Die Protokollstapel NW-S1, NW-S2 weisen die bereits erwähnte Verbund-Dienst-Programmierschnittstellen C-API1, C-API2 und jeweils eine Standard-Dienste-Programmierschnittstelle S-API1, S-API2 auf. Über die Verbund-Dienste-Programmierschnittstellen C-API1, C-API2 können die Verbund-Applikationen VA angesprochen werden und über die Standard-Dienste-Programmierschnittstellen S-API1, S-API2 können die Standard-Applikationen SA angesprochen werden. Die virtuellen Netzwerk-Interface-Controller swNIC1, swNIC2 kennen die unterlagerte Hardware der Netzwerk-Interface-Controller NIC1, NIC2 typischerweise nicht. Sie sind, anders als die Treiber für reale Netzwerk-Interface-Controller, nicht komplett hardwarespezifisch. Allerdings sind bestimmte Hardwareeigenschaften im unterlagerten Netzwerk-Interface-Controller notwendig. Dazu gehört insbesondere die Unterstützung einer zweiten unicast MAC-Adresse in der unterlagerten Netzwerk-Interface-Controller-Hardware. Demnach befinden sich die virtuellen Netzwerk-Interface-Controller swNIC1, swNIC2 über den Netzwerk-Interface-Controllern NIC1, NIC2 der hochverfügbaren Automatisierungsgeräte 11, 12. Dabei kann es sich auf jedem Automatisierungsgerät 11, 12 um alle oder auch nur einen Teil der realen Netzwerk-Schnittstellen handeln. D.h. beispielsweise auf einen Multi-Home-Automatisierungsgerät (Automatisierungsgerät mit mehreren Netzwerkanschlüssen) können alle oder auch nur ein Teil der realen Netzwerk-Schnittstellen mit den zusätzlichen Verbundfunktionalitäten ausgerüstet werden.

Mit FIG 2 sind die zwei Automatisierungsgeräte 11, 12 in einem Steuerungsverbund 1 dargestellt und dieser Verbund kann über eine Adresse angesprochen werden. Die virtuellen Netzwerk-Interface-Controller swNIC1, swNIC2 reichen in einem Zustand aktiv den Datenverkehr von anderen Verbund-Applikationen VA über den Protokollstapel NW-S1, NW-S2 an die eigenen Verbund-Applikationen VA weiter. Umgekehrt wird der über den Protokollstapel NW-S1, NW-S2 kommende Datenverkehr der eigenen Verbund-Applikationen VA über die virtuellen Netzwerk-Interface-Controller swNIC1, swNIC2 und den unterlagerten realen Netzwerk-Interface-Controllern NIC1, NIC2 auf das Bussystem 20 für andere Verbund-Applikationen VA gesendet. Broadcasts und Multicasts werden passend behandelt, also z.B. eingangsseitig dupliziert, wenn erforderlich (damit diese über den normalen Netzwerk-Interface-Controller NIC1, NIC2 zum Protokollstapel NW-S1, NW-S2 (dort eingehend über die Standard-Schnittstelle IP-IF-S)wie auch über den Verbund-Datenverkehr-Weg (nämlich über die virtuellen Netzwerk-Interface-Controllern swNIC1, swNIC2, empfangen werden können, wenn die entsprechenden Applikationen eine getrennte Netzwerk-API verwenden.

Im Zustand "inaktiv" des virtuellen Netzwerk-Interface-Controllers swNIC1, swNIC2 wird kein Datenverkehr weitergeleitet. Empfangene Datenpakete an die Verbund-Hardware-Adresse C-MAC bzw. Verbund-IP-Adresse CIP werden ohne weitere Reaktion verworfen (ebenso Broadcast, Multicast usw.). Von der Verbund-Applikation VA gesendete Datenpakete werden ebenfalls ersatzlos verworfen. In diesem Fall kann ein geeigneter Fehlercode an die Verbund-Applikationen zurückgeliefert werden. Dieser kann den Verbund-Applikationen mitteilen, dass eine "parallele" Verbund-Applikation VA auf dem aktiven Automatisierungsgerät 11, 12 im Steuerungsverbund 1 (Master) die Führungsrolle innehat.

Eine weitere Aufgabe der virtuellen Netzwerk-Interface-Controller swNIC1, swNIC2 besteht darin, die Verbund-Hardware-Adresse C-MAC als Absender-Adresse auf die zu sendenden Frames aufzuprägen, während dessen gesendete Frames der Standard-Kommunikation über den normalen Netzwerk-Interface-Controller NIC1, NIC2 mit der Standard-Hardware-Adresse S-MAC als Absender-Adresse verschickt werden.

Die Verbund-Dienste-Programmierschnittstelle C-API1, C-API2 bildet die Schnittstelle für die Verbund-Erweiterungen im Netzwerk zu den Applikationen. Diese Schnittstelle umfasst sowohl Dataplane/Datenpfad wie auch die Controllplane (d.h. insbesondere den Management-Pfad). Diese Verbund-Dienste-Programmierschnittstelle C-API1, C-API2 besitzt nicht nur eine reine API-Funktionalität, sondern auch funktionale Eigenschaften für den Routingmanager Rout1, Rout2.

Ein Dataplane-Anteil der Verbund-Dienste-Programmierschnittstelle C-API1, C-API2 wird von den Verbund-Applikationen VA benutzt um die netzwerkfähigen Verbund-Dienste VD zu erbringen. Hier arbeitet die Verbund-Dienste-Programmierschnittstelle C-API1, C-API2 eng mit den Routingmanagern Rout1, Rout2 zusammen. Über die Benutzung der Verbund-Dienste-Programmierschnittstelle C-API1, C-API2 durch die Verbund-Applikationen VA wird dem Routingmanager Rout1, Rout2 mitgeteilt, dass es sich bei sämtlichen von diesen Applikationen generierten Datenverkehr um Verbund-Datenverkehr handelt, der über den virtuellen Netzwerk-Interface-Controller swNIC1, swNIC2 und damit über die Verbund-IP-Adresse abzuwickeln ist. Applikationen, welche nicht die Verbund-Dienste-Programmierschnittstelle C-API1, CAPI2 verwenden, sondern stattdessen die Standard-Dienste-Programmierschnittstelle S-API1, S-API2 des Protokollstapels NW-S1, NW-S2 werden wie üblich, über den (Standard)-Netzwerk-Interface-Controllern NIC1, NIC2 und damit über die ihm zugeordneten primären IP-Adressen versendet.

In der Empfangsrichtung signalisiert die Verbund-Dienste-Programmierschnittstelle C-API, C-API2 den Verbund-Applikationen VA, dass der Protokollstapel NW-S1, NW-S2 Datenpakete über die Verbund-Hardware-Adresse C-MAC1 bzw. über die Verbund-IP-Adresse CIP empfangen hat. D.h. es wurde ein Verbund-Dienst VD bzw. eine Verbund-Applikation VA angesprochen und nicht eine Standard-Applikation SA. Diese Unterscheidung ist insbesondere dann wesentlich, wenn Verbund-Applikationen VA und Standard-Applikationen SA z.B. den gleichen UTP- oder TCP-Port belegen, wie z.B. Webserver als Verbund-Dienst oder Webserver als Standard-Dienst parallel auf Port 80, aber mit unterschiedlichen Aufgaben. Welcher Dienst dann auf dem gleichen Gerät angesprochen wird, legt dann nur noch die IP-Adresse fest. Ein Controlplane-Teil der Verbund-Dienste-Programmierschnittstelle C-API1, C-API2 wird von den Redundanzmanagern RM1, RM2 verwendet. Er steuert darüber hinaus die Zustände (aktiv/inaktiv) des jeweiligen virtuellen Netzwerk-Interface-Controllers swNIC1, swNIC2 über eine erste Enable-Leitung EN1 bzw. eine zweite Enable-Leitung EN2 kann der jeweilige Redundanzmanager RM1, RM2 über den jeweiligen Protokollstapel NW-S1, NW-S2 dem ersten bzw. zweiten virtuellen Netzwerk-Interface-Controller swNIC1, swNIC2 den Zustand aktiv/inaktiv zuweisen.

Die Redundanzmanager RM1, RM2 sind über eine erste logische Kopplung LK1 gekoppelt, die Verbund-Applikationen VA sind über eine zweite logische Kopplung LK2 gekoppelt, und die virtuellen Netzwerk-Interface-Controller swNIC1, swNIC2 sind über eine dritte logische Kopplung LK3 gekoppelt. Wie bereits erwähnt, kann zusätzlich zur ersten logischen Kopplung LK1 auch eine dedizierte Sync-Leitung DSL zwischen den beiden Redundanzmanagern RM1, RM2 vorhanden sein.

Weitere Erklärungen zu den logischen Kopplungen LK1, LK2, LK3:
Die erste logischen Kopplung LK1: Die Zustände der Verbund-Applikationen VA sind synchronisiert. Das muss so sein, weil sie sonst nach einer Umschaltung nicht stoßfrei weiterarbeiten können.

Jeder logische Verbund-Dienst VD wird auf den zwei Automatisierungsgeräten in einer Verbund-Applikation VA erbracht. Diese haben interne Zustände, die zu synchronisieren sind, damit sie nach außen (Blackbox Sicht) wie ein einziger Verbund-Dienst aussehen. Ein Failover FO wird sich demnach nicht auswirken, also es kommt nicht zu Sprüngen oder Zustandsverlusten.

Die zweite logische Kopplung LK2: Hier ist die Abstimmung und der Datenaustausch zwischen den Redundanzmanagern RM1, RM2 gemeint. Die Redundanzmanager RM1, RM2 werden in der Regel auch die Synchronisation der Zustände der Verbund-Applikationen VA durchführen.

Die dritte logische Kopplung LK3: Ist dafür, dass immer nur einer der beiden virtuellen Netzwerk-Controller swNIC1, swNIC2 aktiv ist. Auch das wird von den Redundanzmanagern RM1, RM2 arrangiert.

Die dedizierte Sync-Leitung DSL ist ein physikalisches Medium zur Abstimmung und zum Datenaustausch der Redundanzmanager RM1, RM2. Damit ist die dedizierte Sync-Leitung DSL die Grundlage für die logischen Kopplungen, die letzten Endes darüber realisiert werden. Eine andere Ausprägung wäre die, wo es keine dedizierte DSL gibt, sondern dieser Kommunikationskanal zwischen den Redundanzmanagern RM1, RM2 über das Bussystem 20 besteht, aber mit Nachteilen für die Last aus dem Bus.

Das Umschalten von dem ersten Automatisierungsgerät 11 auf das zweite Automatisierungsgerät 12 passiert durch einen Failover-Vorgang FO, der über das Bussystem 20 an den Steuerungsverbund 1 angeschlossene Client HMI sieht den Steuerungsverbund 1 als eine Blackbox und kann ihn immer mit der gleichen Adresse ansprechen.

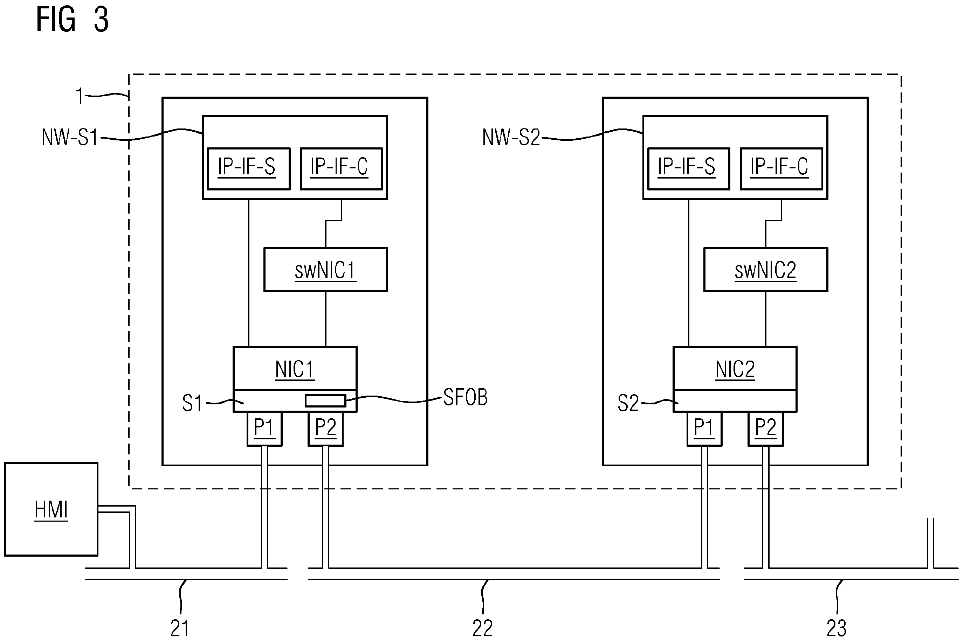

Mit FIG 3 ist eine Linienstruktur eines Bussystems 20 dargestellt. Das Bussystem 20 umfasst in diesem Fall einen unterlagerten Feldbus als Linien-Struktur, wobei ein erstes Bussegment 21, ein zweites Bussegment 22 und ein drittes Bussegment 23 vorhanden sind. Hierbei ist der entsprechende Netzwerk-Anschluss eines Automatisierungsgerätes 11, 12 nicht als ein einzelner Port ausgeführt, sondern der Netzwerk-Anschluss besitzt einen integrierten Layer-2 Switch, und dieser hat typischerweise einen ersten Port P1 und einen zweiten Port P2. Hinsichtlich der bereits beschriebenen redundanten Kommunikationseinrichtung auf den redundanten Automatisierungsgeräten ergibt sich hier das Problem, dass ein Client HMI, der mit einem Teil des Steuerungsverbundes 1 verbunden ist, das durch einen Failover FO von einem Master zu einen Backup geworden ist, nicht mehr mit einem in der Linie der dahinterliegenden Master kommunizieren kann. Das wird dadurch verursacht, dass der erste Switch S1 erkennt/gelernt hat, dass es für die geteilte MAC-Adresse 08-00-06-FF-01-01 einen lokalen Consumer (linkes Teilgerät im Bild) gibt. Da MAC-Adressen in einer Ethernet-Broadcast-Domäne normalerweise eindeutig sind werden Layer-2 Frames an diese Adresse nicht an den anderen zweiten Port P2 weitergeleitet und können damit den aktuellen Master (im Bild das rechte Teilgerät) nicht erreichen. Dieser Zustand hält an, bis der Lerneintrag (Layer-2 Forwarding Data Base FDB) im ersten Switch S1 ausgetimet ist, dies liegt typischerweise im Minutenbereich.

Um diese Situationen zu verhindern, wird eine Switch FDB in den erfindungsgemäßen Steuerungsverbund 1 so beeinflusst, das die MAC-Adresse die im System als Verbund-Hardware-Adresse verwendet wird, sowohl zum lokalen Consumer wie zusätzlich zu den anderen Switch Ports S2 (P1, P2) hinter dem sich das andere Teilgerät des Verbundes befindet, weitergeleitet werden.

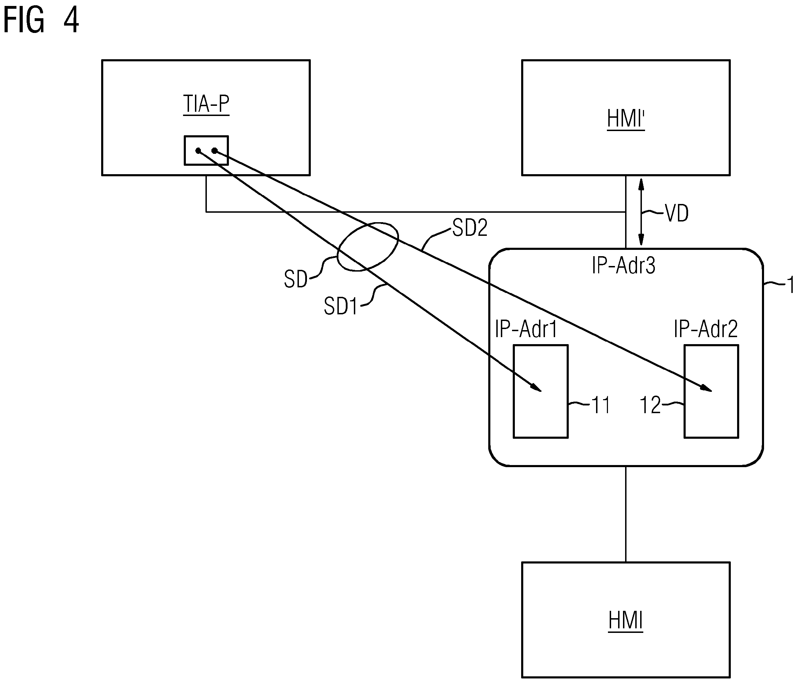

Mit FIG 4 wird noch einmal zusammenfassend das Prinzip dargestellt. Der Steuerungsverbund 1 stellt sich einen Anlagenbetreiber, einen Benutzer oder einen Client HMI bzw. HMI' als eine Blackbox dar. In dieser Blackbox existiert ein erstes Automatisierungsgerät 11 mit einer ersten IP-Adresse 1 und ein zweites Automatisierungsgerät 12 mit einer zweiten IP-Adresse 2. Die Clients HMI, HMI' können über Verbunddienste VD und über eine dritte IP-Adresse mit der Blackbox kommunizieren. Sie haben keine Kenntnis davon, dass im Inneren der Blackbox zwei Automatisierungsgeräte 11, 12 laufen, sie sehen immer nur eines, ansprechbar über eine dritte IP-Adresse 3.

Ein Engineering-System TIA-P kann das erste Automatisierungsgerät 11 und das zweite Automatisierungsgerät 12 über Standard-Dienste SD ansprechen. Das erste Automatisierungsgerät 11 ist explizit durch einen ersten Standard-Dienst SD1 ansprechbar und das zweite Automatisierungsgerät 12 ist explizit durch einen zweiten Standard-Dienst SD2 ansprechbar. Die Clients HMI, HMI' können den ganzen Steuerungsverbund 1 über Verbund-Dienste VD ansprechen. Die Clients HMI, HMI' sehen immer nur ein Gerät und bekommen im Falle eines Failover FO gar nicht mit, dass jetzt eine andere Steuerung für sie zuständig ist.

## Patentansprüche

1. Steuerungsverbund (1) zur Steuerung einer technischen Einrichtung umfassend
- ein Bussystem (20),
- ein erstes Automatisierungsgerät (11) und
- ein zweites Automatisierungsgerät (12), wobei das
- erste Automatisierungsgerät (11) ein erstes Steuerungsprogramm (11a) und das
- zweite Automatisierungsgerät (12) ein zweites Steuerungsprogramm (12a) zum Steuern der technischen Einrichtung aufweist, wobei
- das erste und das zweite Steuerungsprogramm (11a, 12a) derart ausgestaltet sind das sie jeweils die gleichen Steuerungsaufgaben für die technische Einrichtung ausführen, wobei dass
- erste Automatisierungsgerät (11) einen ersten Netzwerk-Interface-Controller (NIC1) mit einer ersten Standard-Hardware-Adresse (S-MAC1) aufweist, welcher an das Bussystem (20) angeschlossen ist und das zweite Automatisierungsgerät (12) einen zweiten Netzwerk-Interface-Controller (NIC2) mit einer zweiten Standard-Hardware-Adresse (S-MAC2) aufweist, welcher an das Bussystem (20) angeschlossen ist,
**dadurch gekennzeichnet, dass**
zwischen dem ersten Netzwerk-Interface-Controller (NIC1) und einem ersten Protokollstapel (NW-S1) des ersten Automatisierungsgeräts (11) ein erster virtueller Netzwerk-Interface-Controller (swNIC1) angeordnet ist und
zwischen dem zweiten Netzwerk-Interface-Controller (NIC2) und einem zweiten Protokollstapel (NW-S2) des zweiten Automatisierungsgeräts (12) ein zweiter virtueller Netzwerk-Interface-Controller (swNIC2) angeordnet ist, wobei weiterhin sowohl der erste als auch der zweite Netzwerk-Interface-Controller (NIC1, NIC2) ausgestaltet ist, zusätzlich eine Verbund-Hardware-Adresse (C-MAC) zu verwalten,
wobei über die erste Standard-Hardware-Adresse (S-MAC1) der erste Protokollstapel (NW-S1) ansprechbar ist und über die Verbund-Hardware-Adresse (C-MAC) der erste Protokollstapel (NW-S1) nur über den ersten virtuellen Netzwerk-Interface-Controller (swNIC1) ansprechbar ist, wenn dieser aktiv geschaltet ist und über die zweite Standard-Hardware-Adresse (S-MAC2) der zweite Protokollstapel (NW-S2) ansprechbar ist und über die Verbund-Hardware-Adresse (C-MAC) der zweite Protokollstapel (NW-S2) nur über den zweiten virtuellen Netzwerk-Interface-Controller (swNIC2) ansprechbar ist, wenn dieser aktiv geschaltet ist.

2. Steuerungsverbund nach Anspruch 1, wobei im erstes Automatisierungsgerät (11) ein erster Redundanzmanager (RM1) und im zweiten Automatisierungsgerät (12) ein zweiter Redundanzmanager (RM2) vorhanden ist, wobei die beiden Redundanzmanager (RM1, RM2) über eine Synchronisations-Verbindung (SL) miteinander in Verbindung stehen und ausgestaltet sind den ersten virtuellen Netzwerk-Interface-Controller (swNIC1) aktiv zu schalten und den zweiten virtuellen Netzwerk-Interface-Controller (swNIC2) inaktiv zu schalten oder umgekehrt.

3. Steuerungsverbund (1) nach Anspruch 2, wobei die beiden Redundanzmanager (RM1, RM2) ausgestaltet sind eine Funktionsüberwachung an ihren Automatisierungsgeräten (11, 12) oder an darin ablaufenden Funktionen durchzuführen und bei einer erkannten Fehlfunktion den jeweils aktiven virtuellen Netzwerk-Interface-Controller (swNIC1, swNIC2) inaktiv zu schalten und den entsprechenden inaktiven virtuellen Netzwerk-Interface-Controller (swNIC1, swNIC2) aktiv zu schalten.

4. Steuerungsverbund (1) nach Anspruch 2 oder 3, wobei die Synchronisations-Verbindung (SV) als eine dedizierte, insbesondere redundante Leitung, ausgestaltet ist.

5. Steuerungsverbund (1) nach Anspruch 2 oder 3, wobei die Synchronisations-Verbindung (SL) als ein Kommunikationskanal mit Layer-2 Ethernet-Frames ausgestaltet ist und über das Bussystem erfolgt.

6. Steuerungsverbund (1) nach einem der Ansprüche 1 bis 5, wobei die Protokollstapel (NW-S1, NW-S2) jeweils eine Standard-Schnittstelle (IP-IF-S) für Datenverkehr von Standard-Applikationen (SA) und eine Verbund-Schnittstelle (IP-IF-C) für Datenverkehr von Verbund-Applikationen (VA) aufweisen.

7. Steuerungsverbund (1) nach Anspruch 6, wobei die Protokollstapel (NW-S1, NW-S2) einen Routingmanager (Rout1, Rout2) aufweisen, welcher ausgestaltet ist Datenverkehr von Standard-Applikationen (SA) über die Standard-Schnittstelle (IP-IF-S) zu leiten und für Datenverkehr von Verbund-Applikationen (VA) über die Verbund-Schnittstelle (IP-IF-C) zu leiten.

8. Steuerungsverbund (1) nach Anspruch 6 oder 7, wobei die Protokollstapel (NW-S1, NW-S2) eine Verbund-Dienste Programmierschnittstelle (C-API1, C-API2) und eine Standard-Dienste Programmierschnittstelle (S-API1, S-API2) aufweisen.

9. Steuerungsverbund (1) nach einem der Ansprüche 1 bis 8, ausgelegt als ein hochverfügbares, redundantes Automatisierungssystem für Automatisierungsanwendungen bei denen die Verfügbarkeit eines Automatisierungsgerätes (11, 12) von höchster Priorität ist, ausgestaltet bei einem Zugriff durch einen Client (HMI) als ein einziges System dargestellt werden.

10. Steuerungsverbund (1) nach einem der vorhergehenden Ansprüche, wobei das Bussystem (20) ein erstes Bussegment (21), ein zweites Bussegment (22) und ein drittes Bussegment (23) aufweist, dabei ist das erst Automatisierungsgerät (11) über einen ersten Switch (S1) mit einem ersten Port (P1) an dem ersten Bussegment (21) angeschlossen und mit einem zweiten Port (P2) an dem zweiten Bussegment (22) angeschlossen und das zweite Automatisierungsgerät (12) ist über einen zweiten Switch (S2) mit einen ersten Port (P1) am zweiten Bussegment (22) und mit einem zweiten Port (P2) an dem dritten Bussegment (23) angeschlossen, wobei in dem ersten Switch (S1) eine Switch-FDB (SFDB) vorhanden ist, welche zur Weiterleitung des Datenverkehrs für die Verbund-Hardware-Adresse (V-MAC) zum zweiten Switch (S2) beeinflussbar ist.

11. Verfahren zum Betrieb eines Steuerungsverbunds (1) zur Steuerung einer technischen Einrichtung wobei an einem
- Bussystem (20),
- ein erstes Automatisierungsgerät (11) und
- ein zweites Automatisierungsgerät (12) redundant betrieben werden, wobei auf dem ersten Automatisierungsgerät (11) ein erstes Steuerungsprogramm (11a) und auf dem zweiten Automatisierungsgerät (12) ein zweites Steuerungsprogramm (12a) zum Steuern der technischen Einrichtung abläuft, wobei
- das erste und das zweite Steuerungsprogramm (11a, 12a) derart ausgestaltet sind das sie jeweils die gleichen Steuerungsaufgaben für die technische Einrichtung ausführen, wobei das erste Automatisierungsgerät (11) über einem ersten Netzwerk-Interface-Controller (NIC1) mit einer ersten Standard-Hardware-Adresse (S-MAC1) am Bussystem (20) betrieben wird und das zweite Automatisierungsgerät (12) über einen zweiten Netzwerk-Interface-Controller (NIC2) mit einer zweiten Standard-Hardware-Adresse (S-MAC2) am Bussystem (20) betrieben wird,
**dadurch gekennzeichnet, dass**
zwischen dem ersten Netzwerk-Interface-Controller (NIC1) und einem ersten Protokollstapel (NW-S1) des ersten Automatisierungsgeräts (11) ein erster virtueller Netzwerk-Interface-Controller (swNIC1) betrieben wird und zwischen dem zweiten Netzwerk-Interface-Controller (NIC2) und einem zweiten Protokollstapel (NW-S2) des zweiten Automatisierungsgeräts (12) ein zweiter virtueller Netzwerk-Interface-Controller (swNIC2) betrieben wird, wobei weiterhin sowohl der erste als auch der zweite Netzwerk-Interface-Controller (NIC1, NIC2) zusätzlich mit einer Verbund-Hardware-Adresse (C-MAC) am Bussystem (20) betrieben wird,
wobei über die erste Standard-Hardware-Adresse (S-MAC1) der erste Protokollstapel (NW-S1) angesprochen wird und über die Verbund-Hardware-Adresse (C-MAC) der erste Protokollstapel (NW-S1) nur über den ersten virtuellen Netzwerk-Interface-Controller (swNIC1) angesprochen werden kann, wenn dieser aktiv geschaltet ist, und
über die zweite Standard-Hardware-Adresse (S-MAC2) der zweite Protokollstapel (NW-S2) angesprochen wird und über die Verbund-Hardware-Adresse (C-MAC) der zweite Protokollstapel (NW-S2) nur über den zweiten virtuellen Netzwerk-Interface-Controller (swNIC2) angesprochen werden kann, wenn dieser aktiv geschaltet ist.

12. Verfahren nach Anspruch 11, wobei im erstes Automatisierungsgerät (11) ein erster Redundanzmanager (RM1) und im zweiten Automatisierungsgerät (12) ein zweiter Redundanzmanager (RM2) betrieben wird, wobei die beiden Redundanzmanager (RM1, RM2) über eine Synchronisations-Verbindung (SL) miteinander in Verbindung stehen und ausgestaltet sind den ersten virtuellen Netzwerk-Interface-Controller (swNIC1) aktiv zu schalten und den zweiten virtuellen Netzwerk-Interface-Controller (swNIC2) inaktiv zu schalten oder umgekehrt.

13. Verfahren nach Anspruch 12, wobei die beiden Redundanzmanager (RM1, RM2) eine Funktionsüberwachung an ihren Automatisierungsgeräten (11, 12) oder an darin ablaufenden Funktionen durchführen und bei einer erkannten Fehlfunktion an einem Automatisierungsgerät (11) den aktiven virtuellen Netz-werk-Interface-Controller (swNIC1, swNIC2) inaktiv schalten und den entsprechenden inaktiven virtuellen Netzwerk-Interface-Controller (swNIC1, swNIC2) des anderen Automatisierungsgerätes (12) aktiv schalten.

14. Verfahren nach Anspruch 12 oder 13, wobei die Synchronisations-Verbindung (SL) als ein Kommunikationskanal mit Layer-2 Ethernet-Frames betrieben wird und über das Bussystem (20) und die Netzwerk-Interface-Controller (NIC1, NIC2) aufgebaut wird.

15. Verfahren nach Anspruch 11 bis 14, wobei die Protokollstapel (NW-S1, NW-S2) mit jeweils einer Standard-Schnittstelle (IP-IF-S) für Datenverkehr von Standard-Applikationen (SA) und mit einer Verbund-Schnittstelle (IP-IF-C) für Datenverkehr von Verbund-Applikationen (VA) betrieben werden, ausgehender Datenverkehr wird dementsprechend über die entsprechenden Schnittstelle geleitet, wobei bei je nach Zustand des virtuellen Netzwerk-Interface-Controllers (swNIC1, swNIC2) Datenverkehr von Verbund-Applikationen (VA) entweder gesperrt oder weitergeleitet wird, Datenverkehr von Standard-Applikationen (SA) kann unabhängig davon immer gesendet werden, zusätzlich erfolgt die passende Aufprägung der entsprechenden Standard-Hardware-Adresse (S-MAC1).

## Claims

1. Controller cluster (1) for controlling a technical device comprising
- a bus system (20),
- a first automation device (11) and
- a second automation device (12), wherein the
- first automation device (11) has a first control program (11a) and the
- second automation device (12) has a second control program (12a) for controlling the technical device, wherein
- the first and the second control program (11a, 12a) are embodied in such a way that they each carry out the same control tasks for the technical device, wherein the
- first automation device (11) has a first network interface controller (NIC1) with a first standard hardware address (S-MAC1), which is connected to the bus system (20) and the second automation device (12) has a second network interface controller (NIC2) with a second standard hardware address (S-MAC2), which is connected to the bus system (20),
**characterised in that**
a first virtual network interface controller (swNIC1) is arranged between the first network interface controller (NIC1) and a first protocol stack (NW-S1) of the first automation device (11) and
a second virtual network interface controller (swNIC2) is arranged between the second network interface controller (NIC2) and a second protocol stack (NW-S2) of the second automation device (12), wherein furthermore both the first and also the second network interface controller (NIC1, NIC2) are also embodied to administer a cluster hardware address (C-MAC),
wherein the first protocol stack (NW-S1) can be accessed via the first standard hardware address (S-MAC1) and the first protocol stack (NW-S1) can only be accessed via the first virtual network interface controller (swNIC1) via the cluster hardware address (C-MAC) when said controller is switched to active and the second protocol stack (NW-S2) can be accessed via the second standard hardware address (S-MAC2) and the second protocol stack (NW-S2) can only be accessed via the second virtual network interface controller (swNIC2) via the cluster hardware address (C-MAC) when said controller is switched to active.

2. Controller cluster according to claim 1, wherein a first redundancy manager (RM1) is present in the first automation device (11) and a second redundancy manager (RM2) is present in the second automation device (12), wherein the two redundancy managers (RM1, RM2) are connected to one another via a synchronisation connection (SL) and are embodied to switch the first virtual network interface controller (swNIC1) to active and to switch the second virtual network interface controller (swNIC2) to inactive or vice versa.

3. Controller cluster (1) according to claim 2, wherein the two redundancy managers (RM1, RM2) are embodied to carry out a supervision of the functions on their automation devices (11, 12) or on the functions executing therein and, if a malfunction is recognised, to switch the respective active virtual network interface controller (swNIC1, swNIC2) to inactive and to switch the corresponding inactive virtual network interface controller (swNIC1, swNIC2) to active.

4. Controller cluster (1) according to claim 2 or 3, wherein the synchronisation connection (SV) is embodied as a dedicated, in particular redundant line.

5. Controller cluster (1) according to claim 2 or 3, wherein the synchronisation connection (SL) is embodied as a communication channel with Layer-2 Ethernet frames and is made via the bus system.

6. Controller cluster (1) according to one of claims 1 to 5, wherein the protocol stacks (NW-S1, NW-S2) in each case have a standard interface (IP-IF-S) for data traffic from standard applications (SA) and a cluster interface (IP-IF-C) for data traffic from cluster applications (VA) in each case.

7. Controller cluster (1) according to claim 6, wherein the protocol stacks (NW-S1, NW-S2) have a routing manager (Rout1, Rout2), which is embodied to route data traffic from standard applications (SA) via the standard interface (IP-IF-S) and to route data traffic from cluster applications (VA) via the cluster interface (IP-IF-C).

8. Controller cluster (1) according to claim 6 or 7, wherein the protocol stacks (NW-S1, NW-S2) have a cluster services programming interface (C-API1, C-API2) and a standard services programming interface (S-API1, S-API2).

9. Controller cluster (1) according to one of claims 1 to 8, designed as a high-availability, redundant automation system for automation applications for which the availability of an automation device (11, 12) is of highest priority, embodied for access by a client (HMI) to be shown as a single system.

10. Controller cluster (1) according to one of the preceding claims, wherein the bus system (20) has a first bus segment (21), a second bus segment (22) and a third bus segment (23), in this case the first automation device (11) is connected via a first switch (S1) to a first port (P1) on the first bus segment (21) and to a second port (P2) on the second bus segment (22) and the second automation device (12) is connected via a second switch (S2) to a first port (P1) on the second bus segment (22) and to a second port (P2) on the third bus segment (23), wherein a switch FDB (SFDB) is present in the first switch (S1), which is able to be influenced for forwarding the data traffic for the cluster hardware address (V-MAC) to the second switch (S2).

11. Method for operating a controller cluster (1) for controlling a technical device wherein on a
- bus system (20),
- a first automation device (11) and
- a second automation device (12) are operated redundantly, wherein a first control program (11a) runs on the first automation device (11) and a second control program (12a) runs on the second automation device (12) for controlling the technical device, wherein
- the first and the second control program (11a, 12a) are embodied in such a way that they each carry out the same control tasks for the technical device, wherein the first automation device (11) is operated via a first network interface controller (NIC1) with a first standard hardware address (S-MAC1) on the bus system (20) and the second automation device (12) is operated via a second network interface controller (NIC2) with a second standard hardware address (S-MAC2) on the bus system (20),
**characterised in that**
a first virtual network interface controller (swNIC1) is operated between the first network interface controller (NIC1) and a first protocol stack (NW-S1) of the first automation device (11) and a second virtual network interface controller (swNIC2) is operated between the second network interface controller (NIC2) and a second protocol stack (NW-S2) of the second automation device (12), wherein furthermore both the first and also the second network interface controller (NIC1, NIC2) is additionally operated with a cluster hardware address (C-MAC) on the bus system (20), wherein the first protocol stack (NW-S1) is accessed via the first standard hardware address (S-MAC1) and the first protocol stack (NW-S1) can only be accessed via the first virtual network interface controller (swNIC1) via the cluster hardware address (C-MAC) when said controller is switched to active, and the second protocol stack (NW-S2) is accessed via the second standard hardware address (S-MAC2) and the second protocol stack (NW-S2) can only be accessed via the second virtual network interface controller (swNIC2) via the cluster hardware address (C-MAC) when said controller is switched to active.

12. Method according to claim 11, wherein a first redundancy manager (RM1) is operated in the first automation device (11) and a second redundancy manager (RM2) is operated in the second automation device (12), wherein the two redundancy managers (RM1, RM2) are connected to one another via a synchronisation connection (SL) and are embodied to switch the first virtual network interface controller (swNIC1) to active and to switch the second virtual network interface controller (swNIC2) to inactive or vice versa.

13. Method according to claim 12, wherein the two redundancy managers (RM1, RM2) carry out a supervision of the functions on their automation devices (11, 12) or on the functions executing therein and if a malfunction is recognised on an automation device (11) switch the active virtual network interface controller (swNIC1, swNIC2) to inactive and switch the corresponding inactive virtual network interface controller (swNIC1, swNIC2) of the other automation device (12) to active.

14. Method according to claim 12 or 13, wherein the synchronisation connection (SL) is operated as a communication channel with Layer-2 Ethernet frames and is set up via the bus system (20) and the network interface controllers (NIC1,
NIC2) .

15. Method according to claim 11 to 14, wherein the protocol stack (NW-S1, NW-S2) is operated with a standard interface (IP-IF-S) for data traffic from standard applications (SA) and with a cluster interface (IP-IF-C) for data traffic from cluster applications (VA) in each case, outgoing data traffic is accordingly routed via the corresponding interface, wherein, depending on the status of the virtual network interface controller (swNIC1, swNIC2), data traffic from cluster applications (VA) is either blocked or forwarded, data traffic from standard applications (SA) can always be sent independently thereof, additionally there is the appropriate application of the corresponding standard hardware address (S-MAC1).

## Revendications

1. Interconnexion (1) de commande pour commander un dispositif technique comprenant
- un système (20) de bus,
- un premier appareil (11) d'automatisation et
- un deuxième appareil (12) d'automatisation, dans lequel, pour commander le dispositif technique
- le premier appareil (11) d'automatisation a un premier programme (11a) de commande et
- le deuxième appareil (12) d'automatisation a un deuxième programme (12a) de commande, dans laquelle
- le premier et le deuxième programme (11a, 12a) de commande sont conformés de manière à effectuer chacun les mêmes tâches de commande pour le dispositif technique, dans laquelle
- le premier appareil (11) d'automatisation a une première unité (NIC1) de commande d'interface de réseau ayant une première adresse(S-MAC1) de matériel standard, qui est raccordée au système (20) de bus et le deuxième appareil (12) d'automatisation a une deuxième unité (NIC2) de commande d'interface de réseau ayant une deuxième adresse (S-MAC2) de matériel standard, qui est raccordée au système (20) de bus,
**caractérisée en ce qu'**une première unité (swNIC1) de commande d'interface de réseau virtuelle est disposée entre la première unité (NIC1) de commande d'interface de réseau et une première pile (NW-S1) de protocole du premier appareil (11) d'automatisation et une deuxième unité (swNIC2) de commande d'interface de réseau virtuelle est disposée entre la deuxième unité (NIC2) de commande d'interface de réseau et une deuxième pile (NW-S2) de protocole du deuxième appareil (12) d'automatisation, dans laquelle en outre à la fois la première et la deuxième unité (NIC1, NIC2) de commande d'interface de réseau sont conformées pour gérer supplémentairement une adresse (C-MAC) matérielle d'interconnexion,
dans laquelle la première pile (NW-S1) de protocole peut réagir par la première adresse (S-MAC1) de matériel standard et la première pile (NW-S1) de protocole ne peut, par l'adresse (C-MAC) de matériel d'interconnexion, réagir que par la première unité (SWNIC1) d'interface de réseau virtuelle, si celle-ci est mise en activité et, par la deuxième adresse (S-MAC2) de matériel standard, la deuxième pile (NW-S2) de protocole peut réagir et, par l'adresse (C-MAC) de matériel d'interconnexion, la deuxième pile (NW-S2) de protocole ne peut réagir que par la deuxième unité (SWNIC2) de commande d'interface de réseau virtuelle, si celle-ci est mise en activité.

2. Interconnexion de commande suivant la revendication 1, dans laquelle il y a dans le premier appareil (11) d'automatisation un premier gestionnaire (RM1) de redondance et dans le deuxième appareil (12) d'automatisation un deuxième gestionnaire (RM2) de redondance, dans laquelle les deux gestionnaires (RM1, RM2) de redondance sont en liaison entre eux par une liaison (SL) de synchronisation et sont conformés pour mettre en activité la première unité (swNIC1) d'interface de réseau virtuelle et pour mettre en inactivité la deuxième unité (swNIC2) de commande d'interface de réseau virtuelle ou inversement.

3. Interconnexion de commande suivant la revendication 2, dans laquelle les deux gestionnaires (RM1, RM2) de redondance sont conformés pour effectuer un contrôle de fonction sur leurs appareils (11, 12) d'automatisation ou sur des fonctions qui s'y déroulent et, s'il est détecté un fonctionnement défectueux, mettre en inactivité l'unité (swNIC1, swNIC2) de commande d'interface de réseau virtuelle active respectivement et mettre en activité l'unité (swNIC1, swNIC2) de commande d'interface de réseau virtuelle inactive correspondante.

4. Interconnexion de commande suivant la revendication 2 ou 3, dans laquelle la liaison (SW) de synchronisation est conformée sous la forme d'une ligne dédiée, notamment redondante.

5. Interconnexion de commande suivant la revendication 2 ou 3, dans laquelle la liaison (SL) de synchronisation est conformée sous la forme d'un canal de communication à trame d'Ethernet à couche-2 et a lieu par le système de bus.

6. Interconnexion de commande suivant l'une des revendications 1 à 5, dans laquelle les piles (NW-S1, NW-S2) de protocole ont chacune une interface (IP-IF-S) standard pour un trafic de données d'applications (SA) standards et une interface (IP-IF-C) d'interconnexion pour un trafic de données d'applications (VA) d'interconnexion.

7. Interconnexion de commande suivant la revendication 6, dans laquelle les piles (NW-S1, NW-S2) de protocole ont un gestionnaire (Rout1, Rout2) de routage, qui est conformé pour conduire un trafic de données d'applications (SA) standards par les interfaces (IP-IF-S) standards et pour conduire un trafic de données d'applications (VA) d'interconnexion par les interfaces (IP-IF-C) d'interconnexion.

8. Interconnexion de commande suivant l'une des revendications 6 ou 7, dans laquelle les piles (NW-S1, NW-S2) de protocole ont une interface (C-API1,C-API2) de programmation de services d'interconnexion et une interface (S-API1, S-API2) de programmation de services standards.

9. Interconnexion de commande suivant l'une des revendications 1 à 8, conçue sous la forme d'un système d'automatisation redondant de grande disponibilité pour des applications d'automatisation, dans lesquelles la disponibilité d'un appareil (11, 12) d'automatisation est de la plus grande priorité, conformée pour un accès par un client (HMI) en étant représentée sous la forme d'un système unique.

10. Interconnexion de commande suivant l'une des revendications précédentes, dans laquelle le système (20) de bus a un premier segment (21) de bus, un deuxième segment (22) de bus et un troisième segment (23) de bus, le premier appareil (11) d'automatisation étant raccordé par l'intermédiaire d'un premier switch (S1) par un premier accès (P1) au premier segment (21) de bus et par un deuxième accès (P2) au deuxième segment (22) de bus et le deuxième appareil (12) d'automatisation étant raccordé par l'intermédiaire d'un deuxième switch (S2) par un premier accès (P1) au deuxième segment (22) de bus et par un deuxième accès (P2) au troisième segment (23) de bus, dans laquelle dans le premier switch (S1) il y a un FDB-switch (SFDB), qui peut être influencé pour l'acheminement de trafic de données pour l'adresse (V-MAC) de matériel d'interconnexion au deuxième switch (S2).

11. Procédé pour faire fonctionner une interconnexion (11) de commande pour la commande d'un dispositif technique, dans lequel on fait fonctionner de manière redondante sur
- un système (20) de bus,
- un premier appareil (11) d'automatisation et
- un deuxième appareil (12) d'automatisation, dans lequel
- sur le premier appareil (11) d'automatisation se déroule un premier programme (11a) de commande et
- sur le deuxième appareil (12) d'automatisation se déroule un deuxième programme (12a) de commande, pour la commande du dispositif technique, dans lequel
- le premier et le deuxième programmes (11a, 12a) de commande sont conformés de manière à effectuer chacun les mêmes tâches de commande pour le dispositif technique, dans lequel
- on fait fonctionner le premier appareil (11) d'automatisation par l'intermédiaire d'une première unité (NIC1) de commande d'interface de réseau par une première adresse (S-MAC1) de matériel standard au système (20) de bus et on fait fonctionner le deuxième appareil (12) d'automatisation par l'intermédiaire d'une deuxième unité (NIC2) d'interface de réseau par une deuxième adresse (S-MAC2) de matériel standard au système (20) de bus,
**caractérisé en ce que**
l'on fait fonctionner une première unité (swNIC1) d'interface de réseau virtuelle entre la première unité (NIC1) d'interface de réseau et une première pile (NW-S1) de protocole du premier appareil (11) d'automatisation et
on fait fonctionner une deuxième unité (swNIC2) d'interface de réseau virtuelle entre la deuxième unité (NIC2) d'interface de réseau et une deuxième pile (NW-S2) de protocole du deuxième appareil (12) d'automatisation, dans lequel on fait fonctionner en outre à la fois la première et également la deuxième unité (NIC1, NIC2) de commande d'interface de réseau supplémentairement par une adresse (C-MAC) de matériel d'interconnexion au système (20) de bus,
dans lequel par l'intermédiaire de la première adresse (S-MAC1) de matériel standard, on fait réagir la première pile (NW-S1) de protocole et, par l'intermédiaire de l'adresse (C-MAC1) de matériel d'interconnexion on ne peut faire réagir la première pile (NW-S1) de protocole que par l'intermédiaire de la première unité (SWNIC1) d'interface de réseau virtuelle, si celle-ci est en activité et
par l'intermédiaire de la deuxième adresse (S-MAC2) de matériel standard on fait réagir la deuxième pile (NW-S2) de protocole et par l'intermédiaire de l'adresse (C-MAC) de matériel d'interconnexion, on ne peut faire réagir la deuxième pile (NW-S2) de protocole que par l'intermédiaire de la deuxième unité (SWNIC2) de commande d'interface de réseau virtuelle, si celle-ci est en activité.

12. Procédé suivant la revendication 11, dans lequel on fait fonctionner dans le premier appareil (11) d'automatisation un premier gestionnaire (RM1) de redondance et dans le deuxième appareil (12) d'automatisation un deuxième gestionnaire (RM2) de redondance, dans lequel les deux gestionnaires (RM1, RM2) de redondance sont en liaison entre eux par une liaison (SL) de synchronisation et sont conformés pour mettre en activité la première unité (swNIC1) d'interface de réseau virtuelle et pour mettre en inactivité la deuxième unité (swNIC2) de commande d'interface de réseau virtuelle ou inversement.

13. Procédé suivant la revendication 12, dans lequel les deux gestionnaires (RM1, RM2) de redondance sont conformés pour effectuer un contrôle de fonction sur leurs appareils (11, 12) d'automatisation ou sur des fonctions qui s'y déroulent et, s'il est détecté un fonctionnement défectueux, mettre en inactivité l'unité (swNIC1, swNIC2) de commande d'interface de réseau virtuelle active respectivement et mettre en activité l'unité (swNIC1, swNIC2) de commande d'interface de réseau virtuelle inactive correspondante.

14. Procédé suivant la revendication 12 ou 13, dans lequel on fait fonctionner la liaison (SL) de synchronisation sous la forme d'un canal de communication à trame Ethernet de couche 2 et on l'établit par l'intermédiaire du système (20) de bus et des unités (MIC1, MIC2) de commande d'interface de réseau.

15. Procédé suivant la revendication 11 à 14, dans lequel on fait fonctionner les piles (NW-S1, NW-S2) de protocole par respectivement une interface (IP-IF-S) standard pour un trafic de données d'applications (SA) standards et par une interface (IP-IF-C) d'interconnexion pour un trafic de données d'applications (VA) d'interconnexion, on fait passer en conséquence un trafic de données sortantes par les interfaces correspondantes, dans lequel on bloque ou on achemine, suivant l'état de l'unité (swNIC1, swNIC2) de commande d'interface de réseau virtuelle, un trafic de données d'applications (VA) d'interconnexion, un trafic de données d'applications (SA) standards pouvant être envoyées toujours indépendamment du point de savoir s'il se produit supplémentairement, l'empreinte adaptée de l'adresse (S-MAC1) de matériel standard correspondante.
